# FASCICULE DE BREVET EUROPEEN

(11) **EP 2 053 200 B1**
(45) Date de publication et mention de la délivrance du brevet: **19.06.2013**
(21) Numéro de dépôt: 08166410.4
(22) Date de dépôt: 13.10.2008
(51) Int. Cl.: F01D 11/00, F01D 11/08, F01D 11/18, F01D 11/24, F01D 25/24

(54) **Contrôle du jeu en sommet d'aubes dans une turbine haute-pression de turbomachine**
Regelung des Blattspitzenspiels der Hochdruckturbine eines Turbinentriebwerks
Control of the blade tip clearance of the high-pressure turbine of a turbomachine

(30) Priorité: 22.10.2007 FR 0707356
(43) Date de publication de la demande: 29.04.2009
(73) Titulaire: Snecma, 75015 Paris (FR)
(72) Inventeur: Dakowski, Mathieu, 94370 Sucy-en-Brie (FR); Dorin-Coppee, Claire, Dorine, 77380 Combs la Ville (FR); Gendraud, Alain, Dominique, 77670 Vernou La Celle/Seine (FR); Pommier, Nicolas, Auguste, Marcel, 91800 Brunoy (FR)
(74) Mandataire: Ramey, Daniel

(56) Documents cités:
- EP-A- 0 327 056
- EP-A- 1 045 115
- DE-A1- 19 734 216
- FR-A- 2 407 342
- FR-A- 2 416 345
- FR-A- 2 428 141
- US-A- 3 430 405
- US-A- 5 176 495

## Description

La présente invention concerne une turbine haute-pression dans une turbomachine, telle qu'un turboréacteur ou un turbopropulseur d'avion.

Une turbomachine comprend essentiellement un compresseur, une chambre de combustion et une turbine, le compresseur alimentant la chambre de combustion en air sous pression, et la turbine recevant les gaz chauds provenant de la chambre de combustion pour en extraire de l'énergie. L'étage de la turbine situé immédiatement en aval de la chambre de combustion, appelé couramment étage haute-pression, comprend un disque muni d'aubes sur sa périphérie et entouré en général par un anneau fixe d'étanchéité porté par un carter (voir par exemple le document FR-A-2 428 141).

Le jeu radial entre les sommets des aubes et l'anneau d'étanchéité doit être le plus faible possible pour minimiser le passage d'air sous pression en dehors de la zone balayée par les aubes et éviter ainsi que les performances de la turbine ne soient pénalisées, mais ce jeu radial doit cependant être suffisant pour éviter tout frottement des sommets des aubes sur l'anneau d'étanchéité.

Or le jeu radial entre les sommets des aubes et l'anneau d'étanchéité dépend des dilatations thermique et mécanique du rotor et de la dilatation thermique du stator de la turbine, en particulier de son carter et de l'anneau d'étanchéité.

Au cours des différentes phases de fonctionnement d'une turbomachine, le jeu radial peut varier considérablement en fonction des déplacements des éléments qui composent le rotor et le stator de la turbine, d'autant plus que ces déplacements peuvent avoir des sens contraires et être répartis de manière inhomogène autour de l'axe de la turbomachine.

En particulier, lors de cycles de fonctionnement couramment appelés ré-accélérations critiques, dans lesquels la turbomachine passe en très peu de temps d'un plein régime stabilisé à un régime de ralenti, pour repasser ensuite rapidement au plein régime, le jeu radial passe par une valeur minimale. En effet, les déplacements dus à la dilatation thermique du disque de rotor sont lents lors du passage du plein régime vers le ralenti du fait de la masse importante du disque et du long temps de réponse thermique qui en résulte ; la masse des éléments du stator étant plus faible, leur réponse thermique est plus rapide. Ainsi, lors d'une ré-accélération soudaine vers le plein régime, le jeu radial est faible entre le rotor qui n'a pas encore eu le temps de se stabiliser thermiquement au régime ralenti et le stator qui a pu atteindre les conditions de fonctionnement au ralenti. La force centrifuge résultant de l'accélération entraîne une dilatation supplémentaire du rotor, réduisant d'autant le jeu radial et susceptible de provoquer une usure prématurée des pièces dans le cas où les sommets des aubes viendraient au contact de l'anneau d'étanchéité.

Il apparaît donc que plus la réponse thermique des éléments du stator est rapide par rapport à celle du rotor, plus le jeu radial entre les sommets des aubes et l'anneau d'étanchéité se trouve réduit au cours d'un cycle de ré-accélération, et plus le risque d'usure prématurée est important.

L'invention a notamment pour but d'apporter une solution simple, économique et efficace à ces problèmes, permettant d'éviter les inconvénients de la technique connue.

Elle a en particulier pour but de ralentir la réponse thermique des éléments du stator d'un étage de turbine dans une turbomachine afin de limiter les réductions du jeu radial entre les sommets des aubes mobiles et l'anneau d'étanchéité entourant ces aubes dans la turbine suite à une ré-accélération.

Elle a plus généralement pour but de rendre les déplacements des éléments du stator homogènes autour de l'axe de la turbomachine pour limiter les réductions du jeu radial en sommet d'aubes.

Elle propose à cet effet un étage de turbine dans une turbomachine, comprenant une roue à aubes tournant à l'intérieur d'un anneau d'étanchéité porté par un carter de la turbine, et une tôle annulaire de protection thermique montée entre le carter et l'anneau, caractérisé en ce que la tôle annulaire de protection thermique est formée de plusieurs plaques incurvées montées bout à bout et fixées par des pions sur le carter.

Cette tôle annulaire de protection thermique permet d'améliorer l'isolation thermique du carter de la turbine de manière à ralentir sa réponse thermique et rendre plus homogène sa dilatation thermique.

Pour faciliter le montage de cette tôle et réduire ainsi les coûts d'assemblage et de maintenance, la tôle annulaire est formée d'au moins deux plaques incurvées montées adjacentes et fixées au carter.

Selon une autre caractéristique de l'invention, les pions sont sertis dans des orifices du carter, et comprennent avantageusement une extrémité extérieure au carter, cette extrémité étant sertie sur une rondelle enfilée sur l'extrémité du pion et appliquée sur la face radialement externe du carter, cette rondelle étant de préférence chanfreinée à sa périphérie interne et fixée par au moins un point de soudure sur le carter.

L'utilisation de ces rondelles permet d'éviter que le carter ne soit endommagé lors du sertissage des pions.

Avantageusement, les pions sont engagés dans des orifices des plaques incurvées et comprennent à leur extrémité radialement interne un rebord annulaire de support des bords des orifices des plaques incurvées, afin d'assurer une fixation correcte de ces plaques au carter.

Dans un mode de réalisation préféré de l'invention, chaque plaque incurvée est fixée au carter par trois pions, dont l'un passe dans un orifice central du milieu de la plaque incurvée et les deux autres dans des orifices des extrémités de cette plaque incurvée. L'orifice central du milieu de la plaque incurvée a une dimension correspondant à la dimension transversale du pion, et l'orifice de chaque extrémité de la plaque a une dimension supérieure à la dimension transversale du pion, pour un montage glissant de la plaque sur le pion en direction circonférentielle.

La fixation par l'orifice central de chaque plaque permet de bloquer la plaque par rapport au carter, tandis que le montage glissant des extrémités des plaques permet de relier ces extrémités au carter tout en autorisant un léger déplacement des plaques en direction circonférentielle pour tenir compte du fait que la dilatation thermique de ces plaques est en général plus importante que celle du carter de la turbine, qui est un peu plus froid que les plaques.

Une extrémité de chaque plaque forme ou comporte avantageusement un couvre-joint par lequel elle est reliée à l'extrémité correspondante de la plaque adjacente, ce couvre-joint comportant l'orifice de passage du pion de fixation et étant de préférence fixé par soudure à l'extrémité de la plaque incurvée.

Ce couvre-joint permet de superposer les orifices de deux plaques adjacentes tout en conservant l'alignement de ces plaques et donc la forme générale annulaire de la tôle de protection thermique formée par ces plaques.

Selon une autre caractéristique de l'invention, la partie radialement interne de chaque pion est montée dans ou forme une entretoise maintenant le rebord annulaire d'extrémité du pion à une distance déterminée du carter, les plaques incurvées comportant de préférence des bossages formés en saillie sur leur face radialement externe et constituant des appuis ponctuels ou quasi-ponctuels sur le carter.

Les entretoises associées aux bossages des plaques permettent de garantir un entrefer suffisant entre la tôle annulaire de protection thermique et le carter, pour réaliser une lame d'air apte à améliorer l'isolation thermique du carter.

Par ailleurs, la forme des bossages est choisie pour limiter au maximum la surface d'échange thermique entre les plaques et le carter.

L'invention concerne en particulier un étage haute-pression de turbine dans une turbomachine.

L'invention concerne également une turbomachine, telle qu'un turboréacteur ou turbopropulseur, caractérisée en ce qu'elle comprend un étage de turbine du type décrit précédemment.

Elle concerne encore des plaques incurvées destinées à former une tôle annulaire de protection thermique du type décrit précédemment.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique partielle en coupe axiale d'une turbomachine d'un type connu ;
- la figure 1a est une vue partielle à plus grande échelle du détail Ia de la figure 1 ;
- la figure 2 est une vue schématique en perspective d'une tôle de protection thermique selon l'invention ;
- la figure 2a est une vue à plus grande échelle du détail IIa de la figure 2 ;
- la figure 2b est une vue à plus grande échelle du détail IIb de la figure 2 ;
- la figure 3 est une vue schématique partielle en coupe axiale, selon un premier plan de coupe, d'un étage de turbine selon un premier mode de réalisation de l'invention ;
- la figure 4 est une vue schématique partielle en coupe axiale, selon un deuxième plan de coupe, de l'étage de turbine de la figure 3 ;
- la figure 5 est une vue schématique partielle en coupe axiale, selon un troisième plan de coupe, de l'étage de turbine de la figure 3 ;
- la figure 6 est une vue schématique partielle en coupe axiale, selon le deuxième plan de coupe, d'un étage de turbine selon un deuxième mode de réalisation de l'invention ;
- la figure 7 est une vue schématique partielle en coupe axiale, selon le troisième plan de coupe, de l'étage de turbine de la figure 6.

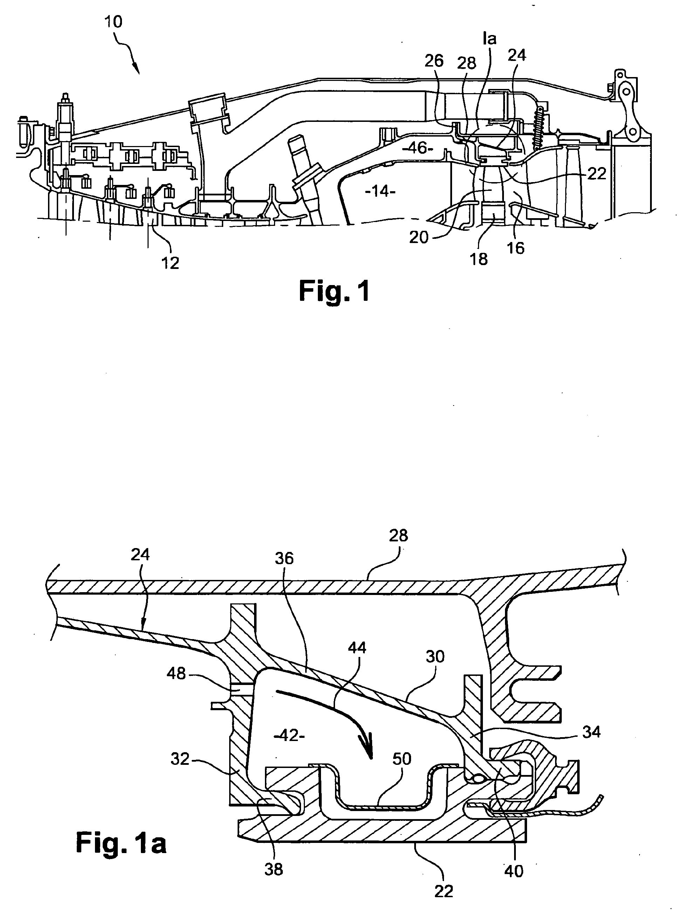

La figure 1 représente une partie d'une turbomachine 10 d'un type connu, comprenant, de l'amont vers l'aval, un compresseur 12, une chambre de combustion 14 et une turbine à gaz 16.

La turbine 16 comporte un étage haute-pression situé immédiatement en aval de la chambre de combustion 14 et destiné à recevoir un flux de gaz chauds issus de la chambre de combustion et fournir ces gaz à un ou plusieurs étages basse-pression avant éjection. L'étage haute-pression comprend un rotor monté sur un arbre auquel est couplé un rotor de compresseur haute-pression tandis que l'étage basse-pression comprend un rotor monté sur un arbre auquel est couplée une soufflante située en entrée de la turbomachine.

Le rotor de l'étage de turbine haute-pression comprend un disque 18 portant des aubes mobiles 20 s'étendant radialement à partir de la périphérie du disque 18 et destinées à entraîner le rotor sous l'effet de la poussée des gaz issus de la chambre de combustion 14.

Le disque 18 est entouré par un anneau d'étanchéité 22 qui est formé d'une pluralité de secteurs annulaires adjacents recouverts d'une couche de matériau abradable sur leur face radialement interne et qui est porté par un carter 24 de la turbine, lui-même relié par des brides 26 à une enveloppe externe 28. L'anneau d'étanchéité 22 est destiné à limiter l'écoulement de gaz en dehors de la zone balayée par les aubes mobiles 20 du disque 18 afin d'optimiser les performances de la turbine.

Comme le montre la figure 1a, les secteurs de l'anneau d'étanchéité 22 sont supportés par une partie annulaire 30 du carter 24 à section sensiblement en U, avec deux ailes radiales 32, 34 dirigées vers l'intérieur de la turbine et un fond 36. A leurs extrémités, les ailes radiales 32, 34 comprennent des rebords axiaux 38, 40 pour le montage des secteurs de l'anneau d'étanchéité 22, d'une manière connue de l'homme du métier.

La partie 30 à section en U du carter 24 de la turbine et l'anneau d'étanchéité 22 forment une cavité 42 d'alimentation des secteurs de l'anneau en air de refroidissement 44 provenant d'un espace de contournement de la chambre de combustion (désigné par la référence 46 sur la figure 1) et passant dans un orifice 48 de l'aile radiale amont.

En outre, les secteurs de l'anneau d'étanchéité 22 sont recouverts d'une tôle d'impact 50 disposée sur leur face radialement externe.

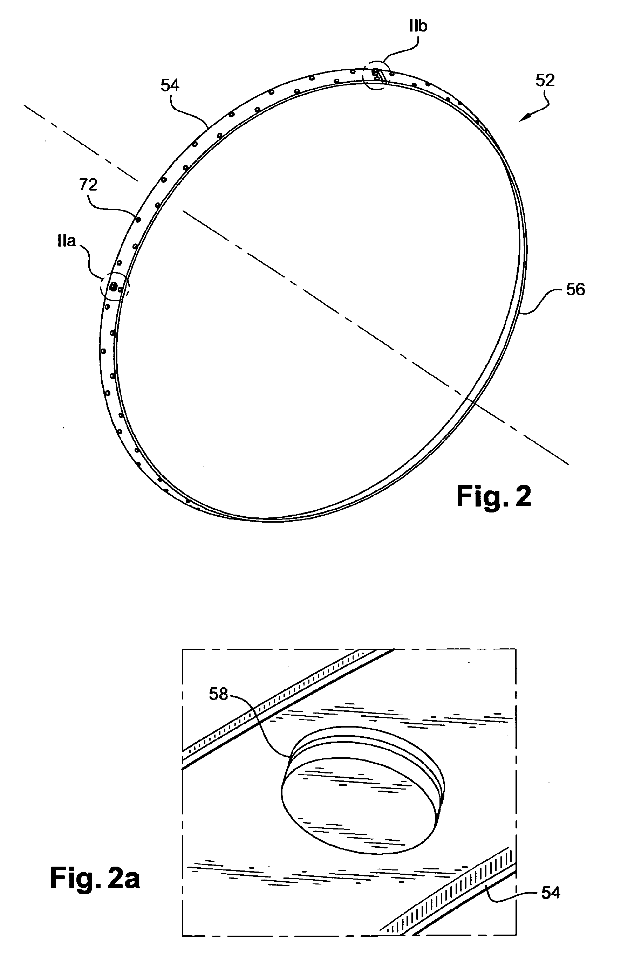

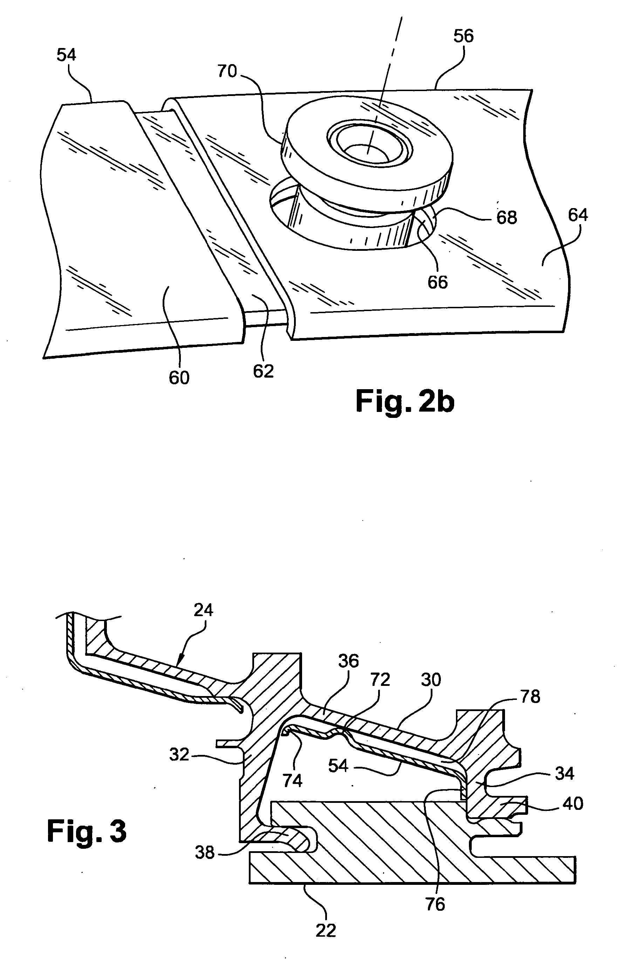

La figure 2 représente une tôle annulaire de protection thermique 52 selon l'invention, destinée à être fixée par des pions sur le fond 36 de la partie 30 du carter de la turbine, à l'intérieur de la cavité 42, afin de ralentir la réponse thermique du carter.

Dans l'exemple représenté, cette tôle de protection thermique 52 est formée de deux plaques incurvées semi-annulaires 54, 56 qui sont identiques l'une à l'autre.

Chaque plaque incurvée 54, 56 comporte un orifice central 58 en son milieu, représenté à plus grande échelle sur la figure 2a, et destiné au passage d'un pion de fixation de la plaque incurvée 54, 56 sur le fond 36, l'orifice 58 ayant une dimension sensiblement égale à celle du pion de manière à permettre un blocage de la plaque 54, 56 par rapport au carter 24 de la turbine.

En outre, chaque plaque incurvée 54, 56 comporte deux orifices de forme oblongue sensiblement identiques l'un à l'autre, un premier orifice étant formé au voisinage de l'une des extrémités de la plaque, tandis que l'autre orifice est formé dans un couvre-joint qui est soudé à l'autre extrémité de la plaque incurvée.

Les deux plaques incurvées sont assemblées l'une à l'autre en faisant coïncider l'orifice du couvre-joint de chaque plaque avec l'orifice de l'extrémité ne comportant pas de couvre-joint de l'autre plaque.

La figure 2b représente ainsi l'extrémité 60 munie d'un couvre-joint 62 de la plaque incurvée 54, placée à proximité de l'extrémité 64 dépourvue de couvre-joint de l'autre plaque incurvée 56 de sorte que l'orifice du couvre-joint 66 soit aligné avec l'orifice 68 de la plaque 56 pour permettre le passage d'un pion 70 fixé au carter au travers des deux orifices 66 et 68. La forme oblongue de ces orifices autorise un montage glissant des extrémités 60, 64 des plaques sur le carter de turbine 24 en permettant une légère translation de chacune des plaques 54, 56 par rapport aux pions de fixation 70.

Les plaques incurvées 54, 56 comportent des bossages ou picots 72 formés en saillie sur leur face radialement externe et destinés à servir d'appuis sensiblement ponctuels sur le fond 36 de la partie 30 à section en U du carter de turbine 24, de manière à maintenir une lame d'air entre les plaques 54, 56 et le fond 36.

La figure 3 représente une vue en coupe semblable à la figure 1a et selon un plan passant par un picot 72 de la plaque incurvée 54.

La plaque 54 comporte des bords 74, 76 recourbés vers l'intérieur de la turbine et en appui respectivement sur les ailes 32 et 34 de la partie 30 à section en U du carter 24 de la turbine, de manière à assurer l'étanchéité de la lame d'air 78. Le bord aval 76 de la plaque 54 forme en outre une jambe d'appui et de guidage radial de la plaque 54 sur l'anneau d'étanchéité 22, destinée à limiter les vibrations de la plaque incurvée 54.

La lame d'air 78 ménagée entre le fond 36 et la plaque incurvée 54 permet d'optimiser l'isolation thermique du carter 24 de la turbine.

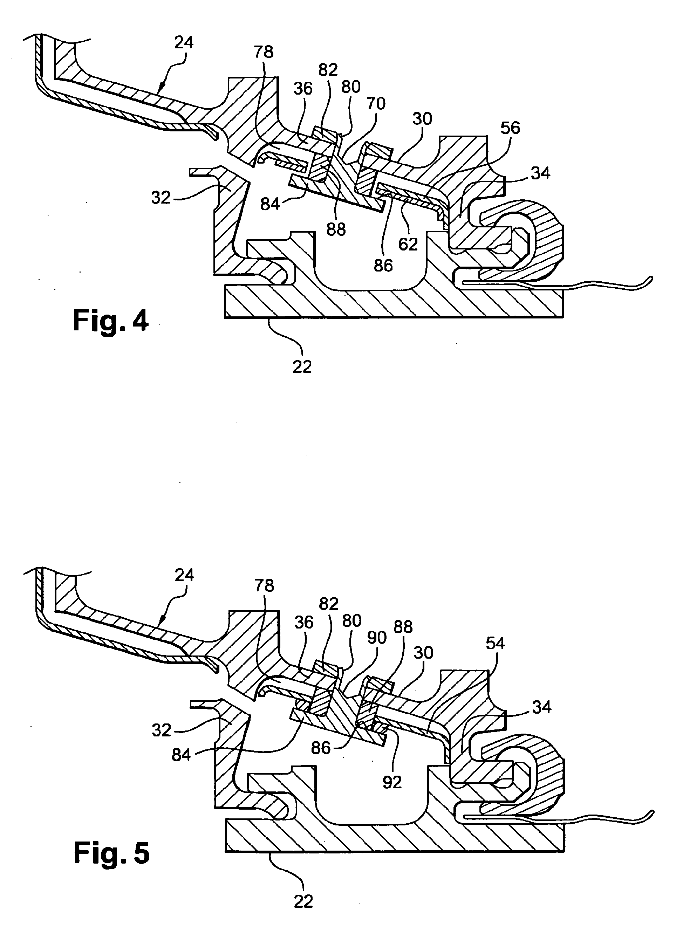

La figure 4 est une vue en coupe semblable à la figure 3, mais dans un plan passant par le pion 70 engagé dans l'orifice de l'extrémité de la plaque 56 et dans l'orifice du couvre-joint 62 de la plaque 54 pour fixer conjointement les plaques 54 et 56 au fond 36 de la partie 30 à section en U du carter 24.

Le pion 70 comprend une jupe dont l'extrémité 80 extérieure au carter 24 de la turbine est sertie sur une rondelle 82 enfilée sur l'extrémité 80 de la jupe du pion et appliquée ou fixée par au moins un point de soudure sur la face radialement externe du fond 36, cette rondelle 82 étant chanfreinée à sa périphérie interne. La rondelle 82 permet d'éviter que le carter 24 ne soit endommagé lors du sertissage du pion 70.

Le pion 70 comprend en outre, à son extrémité radialement interne, une tête 84 dont la surface tournée vers l'extérieur de la turbine forme un rebord annulaire 86 de support du bord de l'orifice du couvre-joint 62.

De plus, le pion 70 est monté dans une entretoise 88 qui permet d'éviter que le pion ne touche la plaque 56 et le couvre-joint 62, tout en maintenant le rebord annulaire 86 de la tête 84 du pion à une distance déterminée du fond 36 de la partie 30 à section en U du carter 24, de manière à garantir un entrefer suffisant pour la lame d'air 78.

La figure 5 est une vue en coupe semblable à la figure 3, mais dans un plan passant par un pion 90 engagé dans l'orifice central 58 du milieu de la plaque 54 pour fixer cette plaque au fond 36.

Le pion 90 étant du même type que le pion 70 décrit ci-dessus, de manière notamment à réduire les coûts de fabrication, une rondelle 92 supplémentaire, d'épaisseur sensiblement égale à l'épaisseur du couvre-joint 62, est intercalée entre le bord de l'orifice 58 de la plaque 54 et le rebord annulaire 86 du pion 90 pour compenser l'absence de couvre-joint au niveau de la fixation centrale de la plaque incurvée.

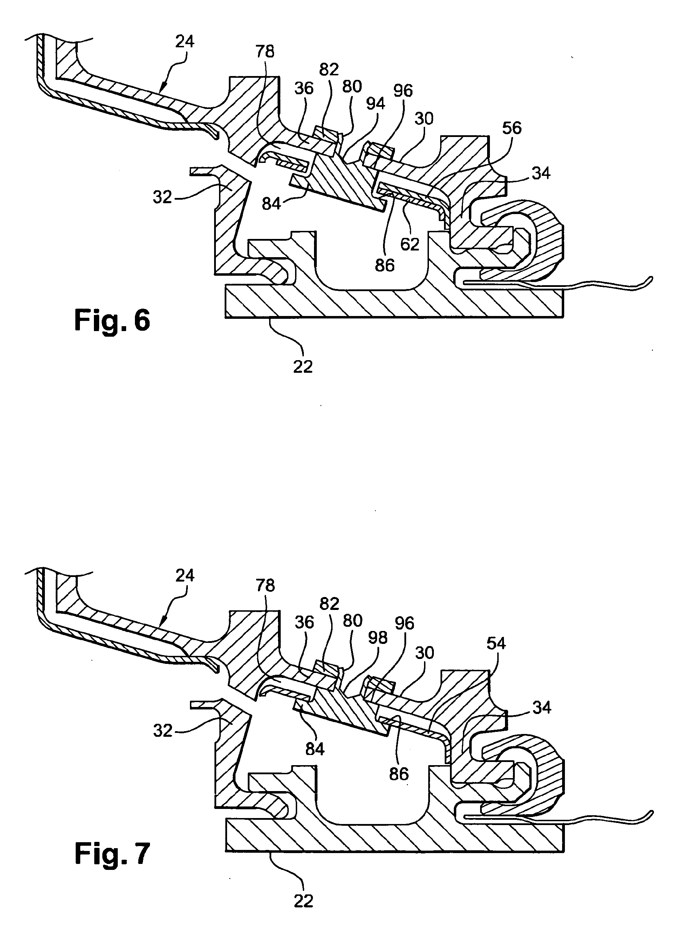

En variante, les entretoises peuvent être formées par les pions de fixation eux-mêmes, comme cela est représenté sur les figures 6 et 7.

Sur la figure 6 qui représente, comme la figure 4, une fixation conjointe des plaques 54 et 56 au carter 24, le pion 94 comporte un épaulement 96 formant un rebord d'appui du pion sur la face radialement interne du fond 36 de la partie 30 à section en U du carter 24 de la turbine. La partie du pion 94 comprise entre cet épaulement 96 et la tête 84 du pion joue ainsi le rôle d'entretoise pour le maintien de l'entrefer et de la lame d'air 78 ménagée dans cet entrefer.

En ce qui concerne la fixation des plaques en leur milieu, le même pion 94 peut être utilisé conjointement avec une rondelle 92 comme dans la variante avec entretoise représentée sur la figure 5.

La figure 7 représente une autre variante dans laquelle un pion 98 de même type que le pion 94 mais ayant une longueur inférieure à celle de ce pion 94 est utilisé afin d'éviter le recours à une rondelle pour compenser l'absence de couvre-joint.

De manière générale, la tôle annulaire de protection thermique 52 selon l'invention comprend au moins deux plaques incurvées pour permettre son montage à l'intérieur de la partie annulaire 30 à section en U du carter 24 de la turbine.

Le montage glissant des extrémités des plaques incurvées permet de tenir compte des phénomènes de dilatation thermique différentielle, les plaques incurvées ayant généralement tendance à subir des dilatations plus importantes que le carter de turbine qui les supporte.

La tôle de protection thermique selon l'invention permet de ralentir la réponse thermique du carter de la turbine si bien que les réductions du jeu radial entre les sommets des aubes mobiles et l'anneau d'étanchéité entourant ces aubes dans la turbine suite à une ré-accélération restent suffisamment faibles pour éviter un contact entre les sommets des aubes mobiles et l'anneau d'étanchéité.

## Revendications

1. Etage de turbine dans une turbomachine (10), comprenant une roue à aubes (18, 20) tournant à l'intérieur d'un anneau d'étanchéité (22) porté par un carter (24), et une tôle annulaire de protection thermique (52) montée entre le carter (24) et l'anneau (22), **caractérisé en ce que** la tôle annulaire de protection thermique (52) est formée de plusieurs plaques incurvées (54, 56) montées bout à bout et fixées par des pions (70, 90, 94, 98) sur le carter (24).

2. Etage de turbine selon la revendication 1, **caractérisé en ce que** les pions (70, 90, 94, 98) sont sertis dans des orifices (58, 66, 68) du carter (24).

3. Etage de turbine selon la revendication 2, **caractérisé en ce que** les pions (70, 90, 94, 98) comprennent une extrémité (80) extérieure au carter (24), cette extrémité étant sertie sur une rondelle (82) enfilée sur l'extrémité du pion et appliquée sur la face radialement externe du carter (24).

4. Etage de turbine selon la revendication 3, **caractérisé en ce que** la rondelle (82) est chanfreinée à sa périphérie interne et est fixée par au moins un point de soudure sur le carter (24).

5. Etage de turbine selon l'une des revendications 1 à 4, **caractérisé en ce que** les pions (70, 90, 94, 98) sont engagés dans des orifices (58, 66, 68) des plaques incurvées (54, 56) et comprennent à leur extrémité radialement interne (84) un rebord annulaire (86) d'appui des bords des orifices (58, 66, 68) des plaques incurvées (54, 56).

6. Etage de turbine selon la revendication 5, **caractérisé en ce que** chaque plaque incurvée (54, 56) est fixée au carter (24) par trois pions, dont l'un passe (90, 98) dans un orifice central (58) du milieu de la plaque incurvée et les deux autres (70, 94) dans des orifices (66, 68) des extrémités (60, 64) de la plaque incurvée.

7. Etage de turbine selon la revendication 6, **caractérisé en ce que** l'orifice central (58) du milieu de la plaque incurvée a une dimension correspondant à la dimension transversale du pion (90, 98), et l'orifice (66, 68) de chaque extrémité (60, 64) de la plaque a une dimension supérieure à la dimension transversale du pion (70, 94), pour un montage glissant de la plaque sur le pion en direction circonférentielle.

8. Etage de turbine selon la revendication 7, **caractérisé en ce qu'**une extrémité (60) de chaque plaque forme ou comporte un couvre-joint (62) par lequel elle est reliée à l'extrémité (64) correspondante de la plaque adjacente, ce couvre-joint (62) comportant l'orifice (66) de passage du pion de fixation (70, 94).

9. Etage de turbine selon l'une des revendications 5 à 8, **caractérisé en ce que** la partie radialement interne de chaque pion (70, 90, 94, 98) est montée dans ou forme une entretoise (88) maintenant le rebord annulaire (86) d'extrémité du pion à une distance déterminée du carter.

10. Etage de turbine selon l'une des revendications 1 à 9, **caractérisé en ce que** les plaques incurvées (54, 56) comportent des bossages (72) formés en saillie sur leur face radialement externe et constituant des appuis ponctuels ou quasi-ponctuels sur le carter (24).

11. Turbomachine, telle qu'un turboréacteur ou turbopropulseur, **caractérisée en ce qu'**elle comprend un étage de turbine selon l'une des revendications 1 à 10.

12. Plaques incurvées (54, 56) destinées à former une tôle annulaire de protection thermique (52) dans un étage de turbine selon l'une des revendications 1 à 10, **caractérisées en ce qu'**elles comprennent des orifices (58, 66, 68) de montage de pions (70, 90, 94, 98) de fixation, chaque plaque incurvée comprenant un orifice central (58) en son milieu et un orifice (66, 68) à chacune de ses extrémités (60, 64) pour le montage des pions de fixation, l'orifice central (58) du milieu de chaque plaque incurvée ayant une dimension correspondant à la dimension transversale d'un pion (90, 98) de fixation, et les orifices (66, 68) des extrémités de chaque plaque ayant une dimension supérieure à la dimension transversale d'un pion (70, 94).

13. Plaques incurvées (54, 56) selon la revendication 12, **caractérisées en ce qu'**une extrémité (60) de chaque plaque forme ou comporte un couvre-joint (62) par lequel elle peut être reliée à l'extrémité (64) correspondante d'une plaque adjacente, ce couvre-joint (62) comportant l'orifice (66) de passage d'un pion de fixation (70).

14. Plaques incurvées (54, 56) selon la revendication 13, **caractérisées en ce que** chaque couvre-joint (62) est fixé par soudure à l'extrémité (60) de la plaque correspondante.

15. Plaques incurvées (54, 56) selon la revendication 14, **caractérisées en ce qu'**elles comportent des bossages (72) en saillie sur leur face externe.

## Patentansprüche

1. Turbinenstufe in einer Turbomaschine bzw. einem Turbinentriebwerk (10), enthaltend ein Schaufelrad (18, 20), das sich innerhalb eines Dichtrings (22) dreht, der von einem Gehäuse (24) getragen wird, sowie ein ringförmiges Wärmeschutzblech (52), das zwischen dem Gehäuse (24) und dem Ring (22) montiert ist, **dadurch gekennzeichnet, dass** das ringförmige Wärmeschutzblech (52) aus mehreren gekrümmten Platten (54, 56) besteht, die auf Stoß montiert und über Zapfen (70, 90, 94, 98) an das Gehäuse (24) befestigt sind.

2. Turbinenstufe nach Anspruch 1, **dadurch gekennzeichnet, dass** die Zapfen (70, 90, 94 98) in Öffnungen (58, 66, 68) des Gehäuses (24) eingequetscht sind.

3. Turbinenstufe nach Anspruch 2, **dadurch gekennzeichnet, dass** die Zapfen (70, 90, 94, 98) ein außerhalb des Gehäuses (24) befindliches Ende (80) aufweisen, wobei dieses Ende auf eine Scheibe (82) gequetscht ist, die auf das Ende des Zapfens aufgefädelt ist und an der radial äußeren Seite des Gehäuses (24) anliegt.

4. Turbinenstufe nach Anspruch 3, **dadurch gekennzeichnet, dass** die Scheibe (82) an ihrem Innenumfang abgeschrägt und über zumindest einen Schweißpunkt an das Gehäuse (24) befestigt ist.

5. Turbinenstufe nach einem der Ansprüche 1 bis 4, **dadurch gekennzeichnet, dass** die Zapfen (70, 90, 94, 98) in Öffnungen (58, 66, 68) der gekrümmten Platten (54, 56) eingreifen und an ihrem radial inneren Ende (84) eine ringförmige Randleiste (86) zum Abstützen der Ränder der Öffnungen (58, 66, 68) der gekrümmten Platten (54, 56) aufweisen.

6. Turbinenstufe nach Anspruch 5, **dadurch gekennzeichnet, dass** jede gekrümmte Platte (54, 56) über drei Zapfen an das Gehäuse (24) befestigt ist, von denen einer (90, 98) in eine zentrale Öffnung (58) in der Mitte der gekrümmten Platte tritt und die beiden anderen (70, 94) in Öffnungen (66, 68) der Enden (60, 64) der gekrümmten Platte treten.

7. Turbinenstufe nach Anspruch 6, **dadurch gekennzeichnet, dass** zwecks gleitbeweglicher Lagerung der Platte an dem Zapfen in Umfangsrichtung die zentrale Öffnung (58) in der Mitte der gekrümmten Platte eine Abmessung hat, die der Querabmessung des Zapfens (90, 98) entspricht, und die Öffnung (66, 68) von jedem Ende (60, 64) der Platte eine Abmessung hat, die größer als die Querabmessung des Zapfens (70, 94) ist.

8. Turbinenstufe nach Anspruch 7, **dadurch gekennzeichnet, dass** ein Ende (60) von jeder Platte eine Fugenabdeckung (62) bildet bzw. aufweist, über die es mit dem entsprechenden Ende (64) der angrenzenden Platte verbunden ist, wobei diese Fugenabdeckung (62) die Öffnung (66) für den Durchtritt des Befestigungszapfens (70, 94) aufweist.

9. Turbinenstufe nach einem der Ansprüche 5 bis 8, **dadurch gekennzeichnet, dass** der radial innere Abschnitt eines jeden Zapfens (70, 90, 94, 98) in einem Steg (8) gelagert ist bzw. diesen bildet, der die ringförmige Randleiste (86) am Ende des Zapfens auf einem bestimmten Abstand von dem Gehäuse hält.

10. Turbinenstufe nach einem der Ansprüche 1 bis 9, **dadurch gekennzeichnet, dass** die gekrümmten Platten (54, 56) Erhebungen (72) aufweisen, die an ihrer radial äußeren Seite vorspringend ausgebildet sind und punktförmige oder quasi-punktförmige Abstützungen an dem Gehäuse (24) bilden.

11. Turbomaschine bzw. Turbinentriebwerk, wie etwa Turbostrahltriebwerk oder Turbopropellertriebwerk, **dadurch gekennzeichnet, dass** sie bzw. es eine Turbinenstufe nach einem der Ansprüche 1 bis 10 aufweist.

12. Gekrümmte Platten (54, 56), die dazu bestimmt sind, ein ringförmiges Wärmeschutzblech (52) in einer Turbinenstufe nach einem der Ansprüche 1 bis 10 zu bilden, **dadurch gekennzeichnet dass** sie Öffnungen (58, 66, 68) zum Lagern von Befestigungszapfen (70, 90, 94, 98) aufweisen, wobei jede gekrümmte Platte eine zentrale Öffnung (58) in ihrer Mitte und eine Öffnung (66, 68) an jedem ihrer Enden (60, 64) zum Lagern der Befestigungszapfen aufweisen, wobei die zentrale Öffnung (58) in der Mitte einer jeden gekrümmten Platte eine Abmessung hat, die der Querabmessung eines Befestigungszapfens (90, 98) entspricht und die Öffnungen (66, 68) der Enden einer jeden Platte eine Abmessung haben, die größer als die Querabmessung eines Zapfens (70, 94) ist.

13. Gekrümmte Platten (54, 56) nach Anspruch 12, **dadurch gekennzeichnet, dass** ein Ende (60) von jeder Platte eine Fugenabdeckung (62) bildet bzw. aufweist, über die es mit dem entsprechenden Ende (64) einer angrenzenden Platte verbunden werden kann, wobei diese Fugenabdeckung (62) die Öffnung (66) für den Durchtritt eines Befestigungszapfens (70) aufweist.

14. Gekrümmte Platten (54, 56) nach Anspruch 13, **dadurch gekennzeichnet, dass** jede Fugenabdeckung (62) durch Verschweißen an das Ende (60) der entsprechenden Platte befestigt ist.

15. Gekrümmte Platten (54, 56) nach Anspruch 14, **dadurch gekennzeichnet, dass** sie Erhebungen (72) aufweisen, die an ihrer äußeren Seite vorspringen.

## Claims

1. Turbine stage in a turbine engine (10), including a wheel with blades (18, 20) rotating inside a sealing ring (22) held by a case (24), and an annular thermal protection sheet (52) mounted between the case (24) and the ring (22), **characterised in that** the annular thermal protection sheet (52) is formed by a plurality of curved plates (54, 56) mounted end-to-end and attached by pins (70, 90, 94, 98) to the case (24).

2. Turbine stage according to claim 1, **characterised in that** the pins (70, 90, 94, 98) are crimped in orifices (58, 66, 68) of the case (24).

3. Turbine stage according to claim 2, **characterised in that** the pins (70, 90, 94, 98) include an end (80) outside the case (24), which end is crimped on a washer (82) threaded onto the end of the pin and applied to the radially external face of the case (24).

4. Turbine stage according to claim 3, **characterised in that** the washer (82) is chamfered at its internal periphery and attached by at least one welding point to the case (24).

5. Turbine stage according to any one of claims 1 to 4, **characterised in that** the pins (70, 90, 94, 98) are engaged in orifices (58, 66, 68) of the curved plates (54, 56) and include, at their radially internal end (84), an annular edge (86) supporting the edges of the orifices (58, 66, 68) of the curved plates (54, 56).

6. Turbine stage according to claim 5, **characterised in that** each curved plate (54, 56) is attached to the case (24) by three pins, of which one (90, 98) goes into a central orifice (58) in the middle of the curved plate and the other two (70, 94) go into orifices (66, 68) at the ends (60, 64) of the curved plate.

7. Turbine stage according to claim 6, **characterised in that** the central orifice (58) at the middle of the curved plate has a dimension corresponding to the transverse dimension of the pin (90, 98), and the orifice (66, 68) at each end (60, 64) of the plate has a dimension greater than the transverse dimension of the pin (70, 94), for a sliding assembly of the plate on the pin in the circumferential direction.

8. Turbine stage according to claim 7, **characterised in that** one end (60) of each plate forms a joint cover (62) by which the corresponding end (64) of the adjacent plate is connected, which joint cover (62) comprises the orifice (66) for passage of the attachment pin (70, 94).

9. Turbine stage according to any one of claims 5 to 8, **characterised in that** the radially internal portion of each pin (70, 90, 94, 98) is mounted in or forms a spacer (88) maintaining the annular end edge (86) of the pin at a determined distance from the case.

10. Turbine stage according to any one of claims 1 to 9, **characterised in that** the curved plates (54, 56) comprise bosses (72) projecting on their radially external face and forming punctiform or quasi-punctiform contacts on the case (24).

11. Turbine engine, such as a turbojet or a turboprop engine, **characterised in that** it includes a turbine stage according to any one of claims 1 to 10.

12. Curved plates (54, 56) intended to form an annular thermal protection sheet (52) in a turbine stage according to any one of claims 1 to 10, **characterised in that** they include orifices (58, 66, 68) for assembling attachment pins (70, 90, 94, 98), in which each curved plate includes a central orifice (58) at its middle and an orifice (66, 68) at each of its ends (60, 64) for assembling attachment pins, in which the central orifice (58) of the middle of each curved plate has a dimension corresponding to the transverse dimension of an attachment pin (90, 98), and the orifices (66, 68) of the ends of each plate have a dimension greater than the transverse dimension of a pin (70, 94).

13. Curved plates (54, 56) according to claim 12, **characterised in that** an end (60) of each plate forms or comprises a joint cover (62) by which it can be connected to the corresponding end (64) of an adjacent plate, in which the joint cover (62) comprises the orifice (66) for passage of an attachment pin (70).

14. Curved plates (54, 56) according to claim 13, **characterised in that** each joint cover (62) is attached by welding to the end (60) of the corresponding plate.

15. Curved plates (54, 56) according to claim 14, **characterised in that** they comprise bosses (72) projecting from their external face.
